# EUROPEAN PATENT APPLICATION

(11) **EP 3 623 821 A1**
(43) Date of publication of application: **18.03.2020**
(21) Application number: 18382665.0
(22) Date of filing: 14.09.2018
(51) Int. Cl.: G01Q 60/06, G01Q 70/18, G01Q 60/08

(54) **SYSTEM FOR SCANNING PROBE MICROSCOPY APPLICATIONS AND METHOD FOR OBTAINING SAID SYSTEM**

(71) Applicant: Consejo Superior de Investigaciones Científicas (CSIC), 28006 Madrid (ES)
(72) Inventor: Martínez Orellana, Lidia, 28049 Madrid (ES); Huttel, Yves, 28049 Madrid (ES)
(74) Representative: Tribalyte Ideas

(57) **Abstract**

The invention relates to a system suitable for its use in scanning probe microscopy, such as tip-enhanced Raman spectroscopy or magnetic force microscopy, that comprises: a tip (1) comprising an apex (1'); a plurality of nanoparticles (2, 2') attached to the tip (1); having a size between 0.5 and 100 nm. Advantageously, the plurality of nanoparticles (2, 2') comprises a cluster (2") of one or more nanoparticles (2') disposed at the apex (1') of the tip (1), wherein the cluster (2") is spaced from any other nanoparticle (2) of the tip (1) at least a distance d of 0.5 nm. The invention also relates to a method for obtaining such system through a controlled thermal treatment that exploits the intrinsic properties of nanoparticles.

## Description

### FIELD OF THE INVENTION

The present invention relates generally to systems used in characterization techniques that combine imaging (scanning probe microscopy, SPM) and other forces or spectroscopies, such as tip-enhanced Raman spectroscopy (TERS) or magnetic force microscopy (MFM), and more particularly to a system comprising a tip coated with nanoparticles, wherein a single nanoparticle (or a group of nanoparticles) is located at the tip apex, providing new properties to the tip. The method of the present invention allows obtaining such system through a controlled thermal treatment of the tip. Such method takes advantage of the size-dependent properties of materials at the nanoscale like the melting temperature. The main field of application of the invention is thus the technology of production of SPM tips based on the deposition of nanoparticles and their treatments for tailoring the final shape and composition of the tips and, thus, their performances exploiting their measuring capabilities.

### BACKGROUND OF THE INVENTION

A SPM (Scanning Probe Microscope) is an instrument used for studying surfaces at the nanoscale level. SPMs form images of surfaces using a probe, also called tip, which scans the surface of a sample and measures the tip-sample interactions and collects the data, typically obtained as a two-dimensional grid of data points and displayed as a computer image.

Like most SPMs, the Atomic Force Microscopy (AFM) uses a tip to scan and map the morphology of a surface. Advantageously in comparison to Scanning Tunnelling Microscopy, with an AFM there is no requirement for the sample to be conductive, nor is it necessary to measure a current between the tip and sample to produce an image. AFM employs the tip, or probe, at the end of a micro-fabricated cantilever to measure the tip-sample forces as the tip interacts (either continuously or intermittently) with the sample. Forces between the tip and the sample surface cause the cantilever to bend, or deflect, as the tip is scanned over the sample. The cantilever deflection is measured and the measurements generate a map of surface topography. The evolution of SPMs has allowed scientists and engineers to observe structures with unprecedented resolution, without the need for rigorous sample preparations. Technical advances and the development of improved scanning techniques have greatly extended the capabilities of SPMs, and particularly Scanning Force Microscopy (SFM), across a wide range of research into materials and life sciences.

In the last decades, several SFM modes have been developed. In addition, there is an increasing interest in techniques that combine SPMs with spectroscopy. For instance, Tip-Enhanced Raman Spectroscopy (TERS) or "nano-Raman" brings Raman spectroscopy into nanoscale resolution imaging. TERS is therefore a super-resolution chemical imaging technique. TERS imaging is performed with an AFM-Raman spectrometer, a Scanning Probe Microscope (SPM) integrated with an optical micro-spectrometer. The scanning probe microscope provides the means for nanoscale imaging, the optical microscope provides the means to bring the light to a functionalised probe, and the spectrometer is the sensor analyzing the light output providing chemical specificity.

The key in TERS is a properly enhancing probe. The localised spectral signal is scattered and converted by the tip apex and then collected with the collecting optics in the far-field. In fact, the obtained signal is a mixture that includes the tip-enhanced near-field Raman signal and the far-field background signal. Then, all of collected Raman signal are guided to the spectroscope to be analyzed. In TERS, the far-field Raman signal is regarded as the background noise, because it contains the spectral information of the whole illuminated area rather than only the nanometer zone beneath the tip.

Recently, efforts have been focused on improving tips for SPM in general and TERS in particular that have been developed and functionalised in order to enhance the resolution of such measurement techniques and to exploit characterization of nano-objects through their physical and chemical properties. Typically, continuous tip coatings have been investigated in this context. Also, the application of coatings through metallic nanoparticles deposition (for instance, with an ion cluster source, ICS) has shown to be a successful way to improve the topographical resolution of the tip, depending largely on the size of the nanoparticles. However, considering other aspects besides the final topographical resolution, there are some other aspects (apart from nanoparticle size) that influence the performance of the tip when measuring spectroscopy or other forces and those are: nanoparticle number, nanoparticle shape, the geometrical distribution of nanoparticles and nanoparticle composition.

However, there is yet another relevant factor that influences the performances of a tip, and that is the existing interaction between neighbouring nanoparticles at the tip, particularly between nanoparticles at the tip apex with respect to nanoparticles at adjacent regions of the apex. Nanoparticles below a critical distance can interact with each other, presenting a collective behaviour. This happens, in conventional methods for producing tips, when a layer of nanoparticles is deposited on the tip, such that nanoparticles are in contact with each other along the whole surface thereof, interacting with each other. This interaction also affects the exploiting of the properties of a single nanoparticle (or a small group of nanoparticles) when it acts as an enhancing probe at the apex (for example, if the nanoparticle or group of nanoparticles has specific magnetic, plasmonic or electrical behaviour).

In order to overcome the aforementioned difficulties, researchers have tried to glue a single microparticle onto a tip/tipless cantilever with a dual-wire technique or cantilever-moving technique. Many efforts have been devoted to improve these methods for stronger attachment, reduced contamination, and mass fabrication capability. However, until today it is virtually impossible for a microparticle to be precisely glued to the tip apex of routine sharp AFM tips. The particle will rather stay on the sidewall of the tip. As a consequence, indirect manners employing sophisticated methods for tailoring and functionalising tips have been recently envisioned, typically through the use of artificial methods of 'nano-sculpture' or 'nano-shaping'.

Given the above limitations in the known techniques for obtaining improved SPM probes, there is still a need of developing tips with suitable control of the size, shape, composition and interparticle distance of the nanostructured coating, capable of overcome the aforementioned difficulties and capable of being implemented in a simpler manner.

The present invention proposes a solution to said need by providing a novel system that comprises a tip and a cluster of a single nanoparticle or a group of nanoparticles on the tip apex, with no physical contact with the rest of nanoparticles of the tip, if any. Said system is obtained through a novel method of production that comprises the deposition of nanoparticles on a tip, followed by a thermal treatment and takes advantage of the size-dependant melting temperature of deposited nanoparticles with a resulting 'self-forming' procedure for tips fabrication.

It is thus an object of the present invention, although without limitation, to provide a method of production of a system comprising a tip and a cluster of a single nanoparticle or a group of nanoparticles for probe enhancement, suitable for different SPM microscopies and particularly suitable for its application in spectroscopic techniques.

### BRIEF DESCRIPTION OF THE INVENTION

An object of the present invention relates, without limitation, to the development of a system according to any of the claims, suitable for its use in scanning probe microscopy, such as tip-enhanced Raman spectroscopy or magnetic force microscopy, which comprises:
- a tip comprising an apex;
- a plurality of nanoparticles attached to the tip; having a size between 0.5 and 1000 nm.

Advantageously, in said system, the plurality of nanoparticles comprises a cluster of one or more nanoparticles disposed at the tip apex, wherein said cluster is spaced from any other nanoparticle of the tip at least a distance *d* of 0.5 nm.

In that way, the system of the invention allows to provide with a tip that acts as an enhancing probe. As an example, a TERS equipment employing such system provides a greater sensitivity and contrast, thanks to the excitation of localised surface plasmons at the tip apex of a single cluster.

In a preferred embodiment of the invention, the nanoparticle cluster comprises two or more nanoparticles and the mean separation between nearest neighbouring nanoparticles is less than 0.5 nm.

In a preferred embodiment of the invention, the cluster is spaced from any other nanoparticle of the tip a distance *d* of at least 1 nm.

In a preferred embodiment of the invention, the cluster is spaced from any other nanoparticle of the tip a distance *d* of at least 5 nm.

In a preferred embodiment of the invention, the cluster is spaced from any other nanoparticle of the tip a distance *d* of at least 10 nm.

In a preferred embodiment of the invention, the cluster is spaced from any other nanoparticle of the tip a distance *d* of at least 100 nm.

In a preferred embodiment of the invention, the cluster is spaced from any other nanoparticle of the tip a distance *d* of at least 1000 nm.

In a preferred embodiment of the invention, the nanoparticles comprise an electrically conductive material. Preferably, said material comprises Au, Ag or a combination thereof. Thereby, the nanoparticles present different patterns of surface plasmon resonance behaviour, which allows an electromagnetic signal enhancement and a nanoantenna-like behaviour.

In a preferred embodiment of the invention, the nanoparticles have a structure of a core-shell.

In a preferred embodiment of the invention, the nanoparticles have a Janus structure, where their surfaces have two or more distinct physical properties. This structure allows two or more different types of chemistry to occur on each same nanoparticle. The simplest case of a Janus nanoparticle is achieved by dividing the nanoparticle into two distinct parts, each of them either made of a different material, or bearing different functional groups. This gives these particles unique properties related to their asymmetric structure and/or functionalisation.

In a preferred embodiment of the invention, the nanoparticles are made of a homogeneous or heterogeneous alloy.

In a preferred embodiment of the invention, the nanoparticles comprise a ferromagnetic, antiferromagnetic, superparamagnetic material or any combination thereof. Preferably, the nanoparticles comprise Co, Fe or any alloys comprising Co and/or Fe. More preferably, the nanoparticles are core-shell nanoparticles comprising Co and/or Fe.

In a preferred embodiment of the invention, the nanoparticles are made of a combination of an electrically conductive material and a magnetic material.

In this manner, it is possible to functionalise the probes and to exploit the magnetic, plasmonic or electric properties of nanoparticles or a combination of them.

In a preferred embodiment of the invention, the cluster disposed in the tip apex has an average cluster size of between 0.5 and 1000 nm. The design of the cluster size allows to partially control the performance of the probe in terms of the enhancement of the property given by the cluster (magnetic, plasmonic, electric, etc.), which can be formed of only one particle or a group of them.

Another object of the invention refers to the use of a system according to any of the claims for any of the following techniques: magnetic force microscopy, tip-enhanced Raman spectroscopy, nanoinfrared microscopy, Kelvin probe force microscopy, piezoresponse force microscopy or scanning capacitance microscopy.

A further object of the invention refers to a method for obtaining a system according to any of the embodiments described in the present document, suitable for its use in SPM technologies, said method comprising the following steps, in the described order:
a) providing a tip comprising an apex;
b) depositing a plurality of nanoparticles with a size between 0.5 and 100 nm on the tip;
c) applying a thermal treatment on the tip and the nanoparticles deposited on the tip in the previous step b) and reaching a temperature between 50 and 1000 Celsius degrees for the nanoparticles, maintaining such temperature at least until the melting temperature of one or more nanoparticles is achieved, so that the plurality of nanoparticles suffers a change in its size distribution and nanoparticle density forming a cluster, wherein said cluster is spaced from any other nanoparticle of the tip at least a distance *d* of 0.5 nm;
d) cooling the tip and nanoparticles down to room temperature.

This method allows obtaining nanoparticles over an AFM tip. The nanoparticles have controlled size and composition. The nanoparticles are disconnected to each other, leaving a cluster of one or more nanoparticles in the apex of the AFM tip. In the apex, the cluster acts as a resonant dipole antenna, for example, if used in a TERS equipment, enhancing the Raman scattering, improving the signal-to-noise ratio and increasing spatial resolution. In addition, the cluster in the apex acts as a magnetic probe, for example, if used in magnetic force microscopy, providing a near-field magnetostatic interaction with the sample, taking advantage of the enhancement of the magnetic moment of magnetic materials in the nanoscale. This effect minimises the stray field and thus avoids perturbations of the magnetic structure of the sample measured, while increasing the spatial resolution of the tip. In this case, by controlling the disposition of the nanoparticles that form the cluster, it is also possible to modify the performance of the tip in terms of shape anisotropy of the cluster.

In a preferred embodiment of the invention, in step b), the procedure for the deposition of the plurality of nanoparticles is one or a combination of the following procedures: sol-gel deposition, deposition of nanoparticles in a solution, gas-phase deposition procedures, or any procedure comprising the deposition of nanometric clusters with a nanoparticle size between 0.5 and 100 nm.

In yet a preferred embodiment of the invention, the thermal treatment of step c) is applied until the cluster is spaced from any other nanoparticle of the tip a distance *d* of at least 1 nm, 5 nm, 10 nm, 100 nm or 1000 nm.

In a preferred embodiment of the invention, in step b), the procedure for the deposition of the plurality of nanoparticles is performed under atmospheric pressure, in vacuum, in high-vacuum or ultra-high-vacuum.

In yet another preferred embodiment of the invention, the thermal treatment comprises one or more of the following treatments: electron beam or photon beam treatments, laser or microwave treatments, treatments by using lamps emitting in a selected wavelength range, furnaces, heating plates or any other thermal treatment capable of heating the nanoparticles at least until their melting temperature.

In yet another preferred embodiment of the invention, the thermal treatment of step c) lasts a period of time between 1 ms and 2 hours.

In yet another preferred embodiment of the invention, the cooling step d) lasts a period of time between 10 seconds and 2 hours.

With the method of the invention, it is possible the fabrication of tips for SPM. The method allows the fabrication of a system of a coated tip that provides new functionalities to the tip and can offer new possibilities for applications in SPM technologies. The method of the invention allows the obtainment of such systems in a very easy manner. The method of the present invention is based in the intrinsic properties of nanoparticles when they are heated in a controlled manner, tending to melt and form larger nanoparticles, with the result of a cluster at the tip apex. It can be said that the method of the invention is a self-forming method that opens a doorway for coated tips functionalisation and exploitation, with relevant direct applications in TERS or nanoIR technologies, among others.

### DESCRIPTION OF THE DRAWINGS

The characteristics and advantages of this invention will be more apparent from the following detailed description, when read in conjunction with the accompanying drawings, in which:

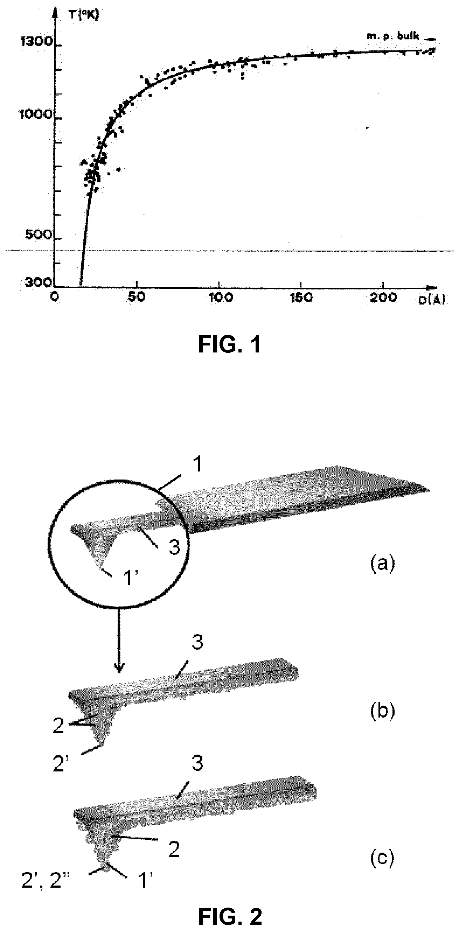

Figure 1 shows the evolution of the melting temperature of gold nanoparticles vs. nanoparticle diameter (source: Physical Review A 13, 2287 (1976)).
Figure 2 shows a diagram of an SPM tip (Figure 2a), a detail of the cantilever and tip apex with nanoparticles before the thermal treatment of the method of the invention (Figure 2b) and after (Figure 2c), showing the melting of nanoparticles (NPs) until a cluster comprising only one nanoparticle is disposed in the tip apex, isolated from other nanoparticles (relative to the near-field), suitable for acting as an enhanced probe in SPM.

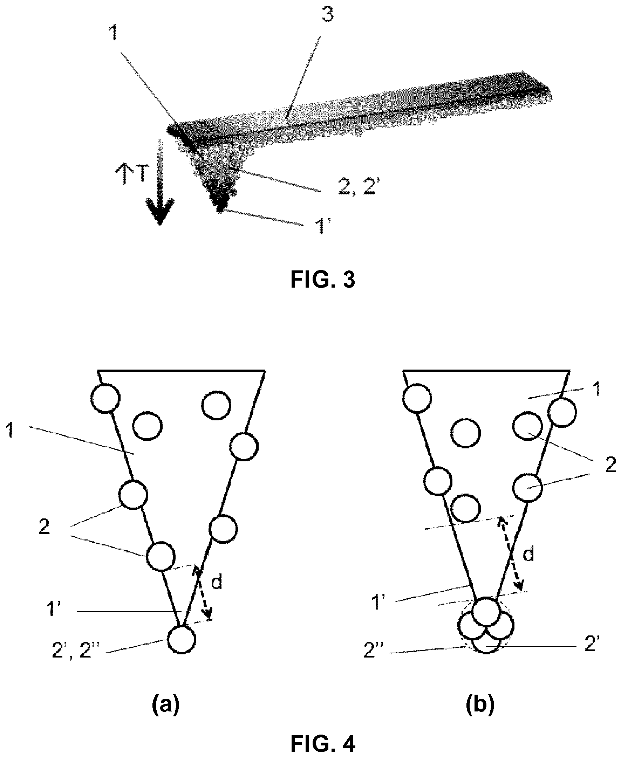

Figure 3 shows a cantilever for SFM microscopy applications, comprising a system according to the invention. The system comprises a tip with a thermal gradient (the darker the nanoparticle, the higher the reached temperature) due to the geometry of the tip and the applied thermal treatment of the method of the invention.
Figures 4a and 4b show two schematic different systems obtained after the applied thermal treatment: (a) a system with only one nanoparticle in the cluster isolated at the tip apex and (b) another system with a group of nanoparticles in the cluster isolated at the tip apex, according to the invention. Spacing distance d is shown in both cases.

### NUMERICAL REFERENCES USED IN THE DRAWINGS

In order to provide a better understanding of the technical features of the invention, the referred Figures 1-4 are accompanied of a series of numeral references which, with illustrative and non limiting character, are hereby represented:

| | |
|---|---|
| (1) | Tip |
| (1') | Tip apex |
| (2) | Nanoparticles |
| (2') | Nanoparticles disposed in the tip apex |
| (2") | Cluster of one or more nanoparticles |
| (3) | Cantilever |

### DETAILED DESCRIPTION OF THE INVENTION

In the following description, for purposes of explanation and not limitation, details are set forth in order to provide a thorough understanding of the present invention. However, it will be apparent to those skilled in the art that the present invention may be practiced in other embodiments that depart from these details and descriptions without departing from the spirit and scope of the invention. Certain embodiments will be described below with reference to the drawings (Fig. 1-4) wherein illustrative features are denoted by reference numerals.

As described in previous sections, a main object of the invention is related to a method for the fabrication and modification of Scanning Probe Microscopy (SPM) probes through the coating of nanoparticles.

In a preferred embodiment of the invention, the AFM tip (1) is a tip made of silicon, silicon nitride or silicon oxide, and comprises an apex (1') (see Figures 2-4). Also, in a further embodiment of the invention, the tip is not subject to any physical or chemical pretreatment before the deposition of nanoparticles (2).

The nanoparticles (2) for the coating can be made of one and/or more elements, which can be: electrically conductive, semiconductors, insulators, ferromagnetic, antiferromagnetic, superparamagnetic, ferrimagnetic, paramagnetic, magneto-optic, piezoelectric, fluorescent, superconductors or any combination thereof.

In a preferred embodiment of the invention, the materials used for coating AFM tips (1) with nanoparticles (2) are gold (Au), silver (Ag) or a combination of them, mainly because the excitation of the plasmon resonances occurring in the nanoparticles (2) of such materials. Preferably, gold containing nanoparticles are chosen for the coating because their better oxidation resistance in comparison to pure silver, which oxides easily during measurement process and can be used only for a few hours.

In a preferred embodiment of the invention, the materials used for coating AFM tips (1) with nanoparticles (2) are cobalt (Co), iron (Fe) or alloys comprising Co or Fe or core-shell structures comprising Co or Fe.

In a preferred embodiment of the invention, the nanoparticles are made of a combination of the previous embodiments (electrically conductive material and magnetic material).

As an example, any material being electrically conductive and/or presenting a surface plasmon resonance is interesting for its use in applications combining AFM with spectroscopy as TERS or nano-infrared (nanoIR) for sample characterization. On the other hand, any material or combination of materials with magnetic properties as Co, Fe, or any of their alloys are interesting for applications which combine AFM with other interaction forces as occur in MFM.

In a preferred embodiment of the invention, the nanoparticles (2) have a Janus structure, where their surfaces have two or more distinct physical properties. This structure allows two or more different types of chemistry to occur on each same nanoparticle (2).

In a preferred embodiment of the invention, the nanoparticles (2) are made of a homogeneous or heterogeneous alloy.

In a preferred embodiment of the invention, the metallic nanoparticles (2) deposition can be made in a deposition chamber containing an ion cluster source (ICS). This method allows the homogeneous and random deposition of nanoparticles (2) over the AFM tip (1) surface. Alternatively, other deposition methods can be employed, such as sol-gel deposition, deposition of nanoparticles (2) in a solution, gas-phase deposition procedures, or any procedure comprising the deposition of nanometric clusters or a nanoparticle (2) with size between 0.5 and 100 nm, under atmospheric pressure, in high pressure, in vacuum, in high-vacuum or ultra-high-vacuum.

In a preferred embodiment, the deposited nanoparticles (2) have an original size equal or less than 100 nm. Typically, the nanoparticles (2) have spherical form and/or a diameter of 4-6 nm.

The main idea underneath the present method of the invention is the exploitation of the intrinsic melting properties of very small nanoparticles (2) (size under 100 nm) compared to their bulk form, as shown in Figure 1, where it is presented the evolution of the melting temperature of a nanoparticle (2) vs. the size or diameter of a nanoparticle (2). As shown, the smaller the nanoparticle (2), the lower the melting temperature, especially with a nanoparticle (2) size under 20 nm. This is, depending on the size of the nanoparticle (2) and the density of nanoparticles per surface area, at a defined temperature, nanoparticles (2) tend to coalesce nearby nanoparticles (2) (see Figures 2a-2c) increasing their dimension to maintain the equilibrium in the thermodynamic system. In this way, a thermal treatment applied to the nanoparticles (2) involves an increase in the temperature which causes an increase in the nanoparticle size and, consequently, a lower density of nanoparticles (2).

In different embodiments of the invention, the thermal treatment comprises one or more of the following treatments: electron beam or photon beam treatments, laser or microwave treatments, treatments by using lamps emitting in a selected wavelength range, furnaces, heating plates or any other thermal treatment capable of heating the nanoparticles (2) at least until their melting temperature.

Regarding the aforementioned intrinsic properties of nanoparticles (2) and as a fundamental summary of information in order to understand the method of the present invention, it can be stated that:
- A surface coated with nanoparticles (2) can be modified with thermal treatments that change the final characteristics of the nanoparticles (2).
- If the applied temperature to a surface coated with nanoparticles (2) is above the melting temperature of the nanoparticles (2), those nanoparticles (2) melt forming larger nanoparticles (2) if they are close enough.
- After the melting, the larger nanoparticles (2) present a higher melting temperature (Figure 1). As a consequence, if the applied temperature does not surpass the new melting temperature, the fusion process stops, resulting in a surface coated with nanoparticles (2) larger than the original ones.
- Thus, the final size of the nanoparticles (2) can be controlled through the applied temperature.
- Such thermal treatment can be applied through several techniques: electron beam or photon beam treatments, laser or microwave treatments, treatments by using lamps emitting in a selected wavelength range, furnaces, heating plates or any other thermal procedure.
- Such thermal treatment can be applied to nanoparticles (2) of any chemical composition and also to nanoparticles (2) deposited on any surface, by any deposition method.
- The morphology of the surface coated with nanoparticles also influences the melting point of the nanoparticles. In a morphology like a tip (1), the temperature reached at the tip apex (1') is higher than in the basement of the tip (1), as depicted in Figure 3, thus, reaching the melting and coalescence of the nanoparticles at the apex (1') before other parts of the tip (1) or the flat surface of the cantilever.

In a preferred embodiment of the invention, the method makes the most of the afore described intrinsic properties of nanoparticles in order to modify AFM tips (1) with nanoparticles (2) by means of a thermal treatment on the tip (1) and the nanoparticles (2). Preferably, the thermal treatment allows locating an isolated single nanoparticle (2') with controlled size at the apex (1') of the tip (1). Alternatively, the thermal treatment allows locating a group of aggregated nanoparticles (2") with controlled size at the apex (1').

Also, in the context of the present invention we will define the term "cluster (2")" of one or more nanoparticles (2') as an aggregate of one or more nanoparticles (2'), in physical contact between the conforming nanoparticles (2') of the cluster (2").

In addition to the above definitions, the expression "physical contact" between nanoparticles (2) and/or clusters (2") is to be understood as comprising a separation distance (the mean separation between nearest neighbouring nanoparticles (2')) between the conforming nanoparticles (2') of the cluster (2") of less than 0.5 nm.

On the other hand, the main technical feature of such cluster (2") is that it is isolated, with "no physical contact" with other nanoparticles (2) of the tip (1). The term "no physical contact" between the cluster (2") and other nanoparticles (2) is defined as a distance d of at least 0.5 nm, as shown in Figure 4.

Figures 4a and 4b show a cluster (2") that is placed at the tip apex (1') spaced at least at a distance d from any other nanoparticle (2). In Figure 4a the cluster is formed by one nanoparticle, while in Figure 4b the cluster is formed by several nanoparticles.

In a measurement, the afore-defined cluster (2") interacts with the sample and generates near-field interactions of different nature, depending on the composition of the cluster (2").

For example, with clusters of conductive material with plasmonic properties, a highly intensive evanescent field at the apex (1') is generated. The key to this electromagnetic behaviour is to prevent neighbouring nanoparticles (2) of the tip (1) (not at the apex (1'), but in the surroundings), which affect the plasmon resonance and the optical response of the cluster of nanoparticles (2"). For this reason, it is necessary to have "no physical contact" to isolate material in the tip apex (1').

In the case of clusters of materials with magnetic properties, a near-field magnetostatic interaction between the tip (1) and the sample is generated. The key again is to prevent neighbouring nanoparticles (2) of the tip (1) (not at the apex (1'), but in the surroundings), which would lead to a collective behaviour of the magnetic nanoparticles, behaving as a continuous coating. The presence of a cluster of nanoparticles (2") minimises the stray field and thus avoids perturbations of the magnetic structure of the sample measured. For this reason it is necessary to have "no physical contact" to isolate material in the apex (1").

In a preferred embodiment of the invention, the method of production of a system according to any of the claims, comprises the following steps:
a) providing an a tip (1) comprising an apex (1');
b) depositing a plurality of nanoparticles (2, 2') with a diameter between 0.5 and 100 nm on the tip (1);
c) applying a thermal treatment on the tip (1) with nanoparticles (2, 2') deposited in the previous step b) and reaching a temperature between 50 and 1000 Celsius degrees for the nanoparticles (2, 2'), maintaining such temperature at least until the melting temperature of one or more nanoparticles (2, 2') is achieved, so that the plurality of nanoparticles (2, 2') suffers a change in its diameter distribution and nanoparticle density; forming a cluster (2"), wherein said cluster (2") is spaced from any other nanoparticle (2) of the tip (1) at least a distance *d* of 0.5 nm;
d) cooling the tip (1) and nanoparticles (2, 2') down to room temperature.

In this way, the final size of the nanoparticles (2) can be controlled with the applied temperature. This method obtains nanoparticles (2) with bigger size separated not connected to each other, leaving the bare base material of the tip (1) between them, as shown in Figure 2c.

Preferably, the applied temperature will depend on the material and size and density of the nanoparticles (2).

Preferably, the cluster (2") of one or more nanoparticles is spaced from any other nanoparticle (2) of the tip (1) a distance d of at least 1 nm. More preferably, the cluster (2") of one or more nanoparticles is spaced from any other nanoparticle (2) of the tip (1) a distance *d* of at least 5 nm. More preferably, the cluster (2") of one or more nanoparticles is spaced from any other nanoparticle (2) of the tip (1) a distance *d* of at least 10 nm. More preferably, the cluster (2") of one or more nanoparticles is spaced from any other nanoparticle (2) of the tip (1) a distance *d* of at least 100 nm. More preferably, the cluster (2") of one or more nanoparticles is spaced from any other nanoparticle (2) of the tip (1) a distance *d* of at least 1000 nm.

Even more preferably, the cluster (2") of one or more nanoparticles is spaced from any other nanoparticle (2) of the tip (1) an "infinite" distance, meaning that there are no other nanoparticles (2) on the tip (1), apart from the ones at the apex (1'), conforming the cluster (2").

In yet another preferred embodiment of the invention, the time of application of the thermal treatment will last between 1 millisecond and 2 hours.

In yet another preferred embodiment of the invention, the time of the cooling treatment will last between 10 seconds and 2 hours.

In yet another preferred embodiment of the invention, the thermal treatment in step c) is applied to a cantilever (4) as shown in Figure 3, where a thermal gradient is obtained, that increases as it gets closer to the apex (1') of the tip (1).

The method is suitable for its use in the fabrication of tips for many SPM techniques as: magnetic force microscopy, tip-enhanced Raman spectroscopy, nano infrared microscopy, Kelvin probe force microscopy, piezoresponse force microscopy or scanning capacitance microscopy.

Another main object of the invention refers to a system obtained through the aforementioned method. Such system comprises a tip (1) and an apex (1'), and a thermally treated coating of nanoparticles (2), with a cluster (2") of one or more nanoparticles (2') attached to the apex (1'), in isolation and with no physical contact with the rest of the nanoparticles (2) of the tip (1), as previously defined.

## Claims

1. Method of production of a system suitable for its use in scanning probe microscopy, such as tip-enhanced Raman spectroscopy or magnetic force microscopy, said method being **characterised in that** it comprises the following steps:
a) providing a tip (1) comprising an apex (1');
b) depositing a plurality of nanoparticles (2, 2') with a size of between 0.5 and 100 nm on the tip (1);
c) applying a thermal treatment on the tip (1) and nanoparticles (2, 2') deposited on the tip (1) in the previous step b) and reaching a temperature between 50 and 1000 Celsius degrees for the nanoparticles (2, 2'), maintaining such temperature at least until the melting temperature of one or more nanoparticles (2, 2') is achieved, so that the plurality of nanoparticles (2, 2') suffers a change in its diameter distribution and nanoparticle density forming a cluster (2"), wherein said cluster (2") is spaced from any other nanoparticle (2) of the tip (1) at least a distance *d* of 0.5 nm;
d) cooling the tip (1) and nanoparticles (2, 2') down to room temperature.

2. Method according to the preceding claim, wherein the thermal treatment of step c) is applied until the cluster (2") is spaced from any other nanoparticle (2) of the tip (1) a distance *d* of at least 1 nm, 5 nm, 10 nm, 100 nm or 1000 nm.

3. Method according to any of the preceding claims, wherein in step b), the procedure for the deposition of the plurality of nanoparticles (2, 2') is one or a combination of the following procedures: sol-gel deposition, deposition of nanoparticles from a solution, gas-phase deposition procedures, or any procedure comprising the deposition of nanometric clusters with a nanoparticle size between 0.5 and 100 nm, under atmospheric pressure, in vacuum, in high-vacuum or ultra-high-vacuum.

4. Method according to any of the preceding claims, wherein in step c), the thermal treatment comprises one or more of the following treatments: electron beam or photon beam treatments, laser or microwave treatments, treatments by using lamps emitting in a selected wavelength range, furnaces or heating plates.

5. Method according to any of the preceding claims, wherein the thermal treatment of step c) lasts a period of time between 1 ms and 2 hours.

6. Method according to any of the preceding claims, wherein the cooling step d) lasts a period of time between 10 seconds and 2 hours.

7. System suitable for its use in scanning probe microscopy, such as tip-enhanced Raman spectroscopy or magnetic force microscopy, directly obtained through a method according to any of the preceding claims, comprising:
- a tip (1) comprising an apex (1');
- a plurality of nanoparticles (2, 2') attached to the tip (1); having a size between 0.5 and 100 nm;
said system being **characterised in that**:
- the plurality of nanoparticles (2, 2') comprises a cluster (2") of one or more nanoparticles (2') disposed at the apex (1') of the tip (1), wherein said cluster (2") is spaced from any other nanoparticle (2) of the tip (1) at least a distance *d* of 0.5 nm.

8. System according to the preceding claim, wherein the cluster (2") comprises two or more nanoparticles (2') and the mean separation between nearest neighbouring nanoparticles (2') in said cluster is less than 0.5 nm.

9. System according to any of claims 7-8, wherein the cluster (2") is spaced from any other nanoparticle (2) of the tip (1) a distance *d* of at least 1 nm, 5 nm, 10 nm, 100 nm or 1000 nm.

10. System according to any of claims 7-9, wherein the nanoparticles (2, 2') comprise an electrically conductive material.

11. System according to the preceding claim, wherein the nanoparticles (2, 2') comprise Au, Ag or a combination of them.

12. System according to any of claims 7-11, wherein the nanoparticles (2, 2') are comprise a ferromagnetic, antiferromagnetic and/or superparamagnetic material.

13. System according to the preceding claim, wherein the nanoparticles (2, 2') comprise Co, Fe or a homogeneous or heterogeneous alloy comprising Co and/or Fe.

14. System according to any of claims 7-13, wherein the nanoparticles (2, 2') have a core-shell structure and/or a Janus structure.

15. Use of a system according to any of claims 7-14 for any of the following techniques: magnetic force microscopy, tip-enhanced Raman spectroscopy, nano infrared microscopy, Kelvin probe force microscopy, piezoresponse force microscopy or scanning capacitance microscopy.
